(19) Europäisches Patentamt / European Patent Office / Office européen des brevets

(11) **EP 2 711 698 B1**

(12) **FASCICULE DE BREVET EUROPEEN**

(45) Date de publication et mention
de la délivrance du brevet:
**09.09.2015 Bulletin 2015/37**

(51) Int Cl.:
***G01N 27/18*** *(2006.01)* ***G01N 30/66*** *(2006.01)*

(21) Numéro de dépôt: **13184581.0**

(22) Date de dépôt: **16.09.2013**

(54) **Capteur de flux thermique avec une membrane supportée par des nanofils**

Wärmeflusssensor mit einer durch Nanodrähte abgestützten Membran

Thermal flow sensor with a membrane supported by nanowires

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.09.2012 FR 1258798**

(43) Date de publication de la demande:
**26.03.2014 Bulletin 2014/13**

(73) Titulaire: **Commissariat à l'Énergie Atomique et aux Énergies Alternatives
75015 Paris (FR)**

(72) Inventeurs:
• **Ruellan, Jérémie
  38000 GRENOBLE (FR)**
• **Duraffourg, Laurent
  38500 VOIRON (FR)**

(74) Mandataire: **Ahner, Philippe
BREVALEX
95, rue d'Amsterdam
75378 Paris Cedex 8 (FR)**

(56) Documents cités:
**WO-A2-2011/044547**

• **ZHANG F T ET AL: "A micro-Pirani vacuum gauge based on micro-hotplate technology", SENSORS AND ACTUATORS A, ELSEVIER SEQUOIA S.A., LAUSANNE, CH, vol. 126, no. 2, 14 février 2006 (2006-02-14), pages 300-305, XP027935467, ISSN: 0924-4247 [extrait le 2006-02-14]**
• **F. RASTRELLO ET AL: "Thermal conductivity detector compact Spice model based on experimental measurements and 3D simulations", SENSORS AND ACTUATORS A: PHYSICAL, vol. 178, 1 mai 2012 (2012-05-01), pages 49-56, XP055047308, ISSN: 0924-4247, DOI: 10.1016/j.sna.2012.02.008**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE ET ART ANTÉRIEUR**

La présente invention se rapporte à un capteur de flux thermique, et à un système de détermination de la concentration des composants d'un gaz à partir de ses caractéristiques thermiques et fluidiques, comportant au moins un tel capteur.

On entend par capteur de flux thermique, tout capteur mesurant un échange de chaleur entre le corps du capteur, par exemple une membrane, et le milieu fluidique dans lequel le capteur est disposé. Ce capteur de flux thermique est par exemple un capteur de gaz notamment de type TCD (Thermal Conductivity Detector) ou un capteur de pression notamment de type jauge Pirani (voir, par exemple, Zhang et al., A Micro-Pirani vacuum gauge based on micro-hotplate technology, Sensors and Actuators A 126 (2006) 300-305).

Ce type de capteur peut être placé à la sortie d'une colonne de chromatographie, plus particulièrement une microcolonne de chromatographie cette dernière permettant de séparer temporellement les différents éléments gazeux d'un mélange complexe. Le capteur sert à quantifier la concentration relative des analytes du gaz à analyser arrivant successivement à sa surface. Les analytes sont mélangés dans un gaz, dit gaz porteur, qui est envoyé dans la colonne de chromatographie et sur le capteur à une vitesse fixée.

Le gaz porteur peut être de l'air sec ou un gaz inerte par exemple.

Il existe plusieurs types de capteur pouvant être disposés en sortie de la colonne de chromatographie.

Les capteurs par ionisation à flamme ou FID (Flame ionization detector) en terminologie anglaise).

Les gaz à analyser sont brûlés sous flux d'hydrogène créant des ions et des électrons. Les particules chargées sont collectées par des électrodes et le courant généré est mesuré avec un pico-ampèremètre. D'une part, ce capteur ne permet que la détection de composants organiques. D'autre part, il requiert un flux d'hydrogène et la quantité produite d'ions restent faibles. Enfin la taille du capteur ne peut être réduite.

Il existe également des capteurs gravimétriques. Il s'agit ici de mesurer la quantité de masse du gaz cible adsorbée à la surface du capteur.

Généralement le capteur est un système vibrant à une fréquence propre d'oscillation. La technique consiste à mesurer le décalage en fréquence par effet gravimétrique vers les basses fréquences provoqué par l'adsorption du gaz. Ces capteurs sont ultra-sensibles pour les grosses molécules gazeuses mais sont moins sensibles en mesure de concentration pour des molécules très légères et/ou volatiles.

Il existe également des capteurs optiques dont le principe de fonctionnement est généralement basé sur l'absorption infrarouge d'un flux optique. Ces capteurs sont adaptés à la détection d'éléments carbonés. Mais pour pouvoir détecter d'autres types de gaz le nombre de sources laser devrait être multiplié, ce qui augmenterait fortement la complexité et le coût d'un tel appareil. Ces capteurs sont également difficilement miniaturisables.

Des capteurs électroniques dont le principe de détection est basé sur la variation d'une propriété électrique (résistance électrique, résistance, potentiel de surface) induit par la présence des molécules de gaz à sa surface. Ces capteurs nécessitent une fonctionnalisation de surface. Les capteurs macroscopiques sont relativement peu sensibles. Les capteurs de taille micrométrique ou nanométriques souffrent, quant à eux, de problème de drift, i.e. de dérive temporelle du signal indépendante du phénomène à mesurer et d'une extrême sensibilité aux états de surfaces initiaux. Ils doivent en outre être fonctionnalisés.

Enfin il existe les capteurs de conductivité thermique dit TCD pour "Thermal Conductivity Detectors".

Un détecteur TCD peut comporter un fil porté à haute température dont on mesure la résistance électrique. Le fil a une température donnée pour un gaz donné. Lorsque le gaz change, les propriétés de l'environnement thermique (conductance thermique, viscosité, convection thermique) changent, ce qui provoque une variation de la température du fil. Cette variation induit elle-même un changement de résistance électrique qui est détectée à travers un pont de mesure. Plus la température du capteur TCD est élevée, meilleure est sa résolution. Le capteur est capable de fonctionner sous air mais l'utilisation d'un environnement sans oxygène permet de s'affranchir de la limite en température imposée par une éventuelle combustion du fil. Généralement il faut placer le fil TCD sous un flux de gaz porteur hélium, hydrogène. Ceci représente une grosse limitation du détecteur. En outre il existe un fort contraste des constantes thermiques entre ces gaz légers et les analytes à détecter ce qui rend le système plus sensible que sous un simple flux d'air sec.

Le document WO2001/044547 décrit un capteur TCD destiné à être disposé en sortie d'une colonne de chromatographie. Ce capteur TCD comporte une plaque support allongée, un élément chauffant allongé situé sur la plaque support, la plaque support et l'élément chauffant sont suspendus dans une chambre dans laquelle circule un gaz. Deux contacts sont prévus pour alimenter en courant l'élément chauffant et deux contacts pour mesurer la tension. L'élément chauffant a une forme en créneau. La résistance électrique de l'élément chauffant est mesurée et permet de déterminer la composition du gaz en contact avec la plaque support.

Ce capteur est de réalisation complexe puisqu'il nécessite la fabrication du support, puis celle de l'élément chauffant et celle des connexions électriques entre l'élément chauffant et le substrat.

En outre, il présente un certain encombrement.

**EXPOSÉ DE L'INVENTION**

C'est par conséquent un but de la présente invention d'offrir un capteur de flux thermique à résolution améliorée, de réalisation simple et présentant un faible encombrement.

Le but précédemment énoncé est atteint par un capteur de flux thermique comportant au moins une membrane suspendue par rapport un substrat par des nanofils, des moyens de chauffage et des moyens de polarisation de la membrane formés par des nanofils reliant la membrane à au moins une source de courant et des moyens de mesure de la tension électrique aux bornes la membrane.

Les moyens de mesure de tension peuvent être formés par des nanofils reliant la membrane et un voltmètre.

La mise en oeuvre de nanofils entre la membrane et le substrat assure une isolation thermique de la membrane par rapport au substrat, ce qui limite les fuites thermique via les moyens de suspension de la membrane et rend le dispositif plus sensible aux fuites thermiques se faisant par le biais du gaz.

Les nanofils de chauffage, de polarisation et de mesure de la variation de tension peuvent former les nanofils de suspension mécanique, ce qui réduit encore les zones de fuites thermiques.

De manière avantageuse, les nanofils de chauffage servent également à la polarisation, le nombre de nanofils est donc réduit.

De manière préférentielle, les nanofils de polarisation et les nanofils de mesure de la variation de tension sont distincts, ce qui permet une mesure hautement résolue de la température de la membrane.

Le capteur de flux thermique présente de très petites dimensions, il peut alors être co-intégré avec l'électronique et le système pré-analytique formé par la colonne de chromatographie.

Ce capteur présente l'avantage d'offrir une très grande surface d'échange thermique avec le gaz ce qui le rend le capteur plus sensible à la nature du gaz.

La présente invention a alors pour objet un capteur de flux thermique comportant un premier support, au moins une première membrane suspendue par rapport au support par au moins quatre nanofils, ladite première membrane étant réalisée en au moins un matériau conduisant le courant, et les nanofils étant réalisés en un matériau conduisant le courant, deux nanofils reliés à une source de courant pour former des moyens de polarisation entre deux bornes de la première membrane et de chauffage de ladite première membrane, et deux nanofils étant reliés à des moyens de mesure de la tension aux bornes de la première membrane.

Les moyens de mesure de la tension peuvent être réalisés par tous moyens connus de mesure de tension et par exemple un voltmètre, un oscilloscope, ou encore un dispositif de détection synchrone.

Selon l'invention, les nanofils ont une section comprise entre 10x10 nm$^2$ et 1000x1000 nm$^2$

De manière également avantageuse, la première membrane a une épaisseur comprise entre 10 nm et 1 $\mu$m.

Dans un exemple de réalisation, la première membrane et les nanofils sont formés par une même couche de matériau conduisant le courant de sorte à être d'un seul tenant.

La première membrane et les nanofils peuvent être réalisés en matériau semi-conducteur, par exemple en silicium dopé N ou P, en germanium ou en SiGe. Par exemple, les nanofils sont réalisés en silicium dopé de manière à annuler le coefficient thermique de résistivité.

En variante, la première membrane et les nanofils peuvent être réalisés en tout matériau conducteur et de préférence en matériau conducteur de fort coefficient de température de résistance TCR tels que les matériaux semi-conducteurs, Le TiN, les alliages métalliques, les siliciures.

Par exemple, la première membrane comporte une première partie d'un seul tenant avec les nanofils et une deuxième partie formée par une couche de matériau formé sur la première partie, le matériau des nanofils et de la première partie présentant une faible conductivité thermique et le matériau de la deuxième partie présente un coefficient de température de résistance élevé.

La conductivité thermique du matériau des nanofils et de la première partie est de préférence inférieure à 100 W/m.K et le coefficient de température de résistance du matériau de la deuxième partie est de préférence supérieur à 1000ppm/K.

Les nanofils et la première partie sont par exemple en silicium et la deuxième partie est en TiN.

La deuxième partie peut-être en tout matériau conducteur de fort coefficient de température de résistance (TCR) tel que les matériaux semi-conducteurs, le TiN, les alliages métalliques, les siliciures. De façon plus générale, ce matériau est choisi de façon à avoir la conductivité thermique, la conductivité électrique et le coefficient de température de résistance les plus importants possibles alors que le matériau de la première partie est choisi pour avoir la conductivité thermique la plus faible possible.

La source de courant peut être une source de courant alternatif, qui peut avoir une fréquence comprise entre 10 Hz et 1MHz et avantageusement 1KHz et 10KHz.

Le capteur peut comporter des éléments de suspension supplémentaires destinés uniquement à la suspension mécanique de la première membrane par rapport au support. Ces éléments de suspension peuvent être non linéaires, par exemple en serpentin ou muni de deux portions rectilignes raccordés par une cadre de frome rectangulaire.

Le capteur de flux thermique peut également comporter des encastrements des nanofils et/ou des moyens de suspension supplémentaires sur le support, les encastrements des nanofils et/ou des moyens de suspension supplémentaires étant nanostructurés de sorte à réduire la conduction thermique des encastrements.

Dans un exemple avantageux, la première membrane a la forme d'un losange, les nanofils étant connectés aux sommets reliés par la plus grande diagonale du losange

Le capteur de flux thermique peut comporter une deuxième membrane suspendue à un deuxième support par au moins quatre nanofils, ladite deuxième membrane étant disposée parallèlement à la première membrane à une distance non nulle, lesdits nanofils étant réalisés en un matériau conduisant le courant, deux nanofils étant reliés à une deuxième source de courant pour former des moyens de polarisation entre deux bornes de la deuxième membrane, et deux nanofils étant reliés des moyens de mesure de la tension aux bornes de la deuxième membrane, les nanofils ayant une section comprise entre $10 \times 10$ nm$^2$ et $1000 \times 1000$ nm$^2$.

Selon une variante, les première et deuxième sources de courant sont des sources de courants alternatifs, la deuxième source de courant délivre un courant de fréquence différente de la fréquence du courant délivré par la première source de courant.

Selon une autre variante, les première et deuxième sources de courant sont des sources de courants continues, la deuxième source de courant délivre un courant d'intensité inférieure à l'intensité du courant délivré par la première source de courant de façon à éviter l'auto-échauffement dans la seconde membrane.

La présente invention a également pour objet un système de détermination de la concentration d'un environnement gazeux comportant au moins un capteur de flux thermique selon la présente invention, une électronique de traitement des valeurs de tension électrique délivrées par le capteur.

La présente invention a également pour objet un dispositif d'analyse d'un gaz ou mélange de gaz comportant une colonne de chromatographie en phase gazeuse et au moins un système de détermination selon la présente invention, la première et éventuellement la deuxième membrane étant suspendue dans un canal connecté à la sortie de la colonne de chromatographie en phase gazeuse.

## BRÈVE DESCRIPTION DES DESSINS

La présente invention sera mieux comprise à l'aide de la description qui va suivre et des dessins en annexe sur lesquels :

- la figure 1 est une représentation schématique d'une vue de dessus d'un exemple de réalisation d'une partie d'un capteur de flux thermique selon l'invention
- la figuré 2 est une vue en coupe transversale d'un capteur de flux thermique selon l'invention, la coupe représente également un exemple de canal fluidique dans lequel le capteur peut-être intégré,
- la figure 3 est une représentation schématique du circuit électrique de polarisation de la membrane et de mesure de tension aux bornes de la membrane,
- la figure 4 est un organigramme représentant les étapes successives de fonctionnement d'un capteur de flux thermique dans le cas particulier d'un capteur de gaz selon la présente invention,
- la figure 5 est une représentation schématique que d'une vue de côté d'un autre exemple de réalisation d'un capteur de flux thermique dans la présente invention,
- les figures 6A à 6D sont des représentations schématiques des vues de dessus de variantes de réalisation d'un capteur de flux thermique selon la présente invention,
- la figure 7 est une représentation en perspective d'un autre exemple de réalisation d'un capteur de le thermique selon la présente invention permettant une mesure différentielle,
- les figures 8A à 8H sont des représentations schématiques différentes étapes d'un exemple de procédé de réalisation d'un capteur de flux thermique selon la présente invention,

## EXPOSÉ DÉTAILLÉ DE MODES DE RÉALISATION PARTICULIERS

Dans la présente demande, on entend par "capteur de flux thermique" le dispositif captant une variation de température et fournissant un signal électrique représentatif de la variation de tension électrique, et on entend par "système de détermination de la concentration", un système comportant le capteur de flux thermique et des moyens de traitement des signaux émis par le capteur et délivrant une valeur de concentration en analyte.

Dans la description qui va suivre, les termes "gaz", "mélange gazeux", "environnement gazeux" sont considérés comme synonymes et désignent un analyte ou un mélange d'analytes à analyser.

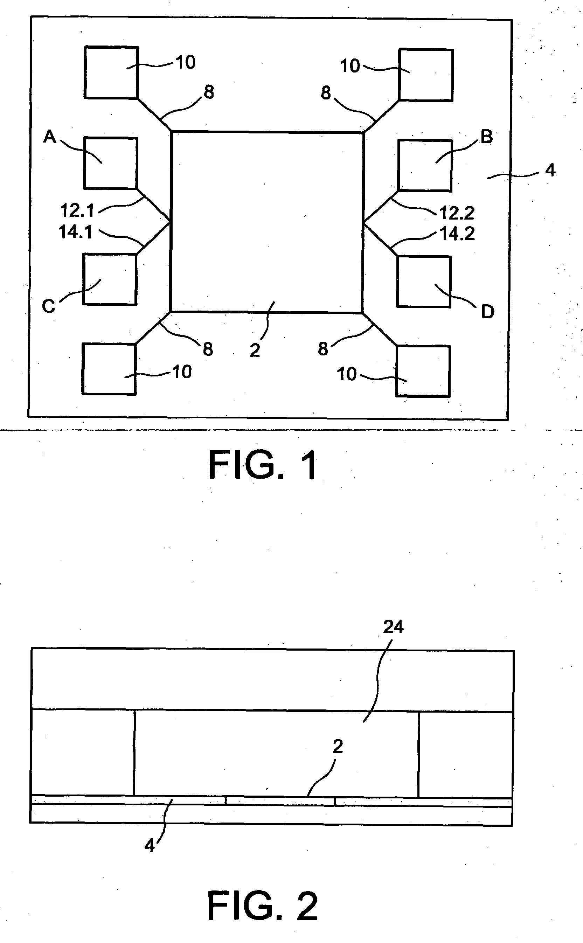

Sur la figure 1, on peut voir un capteur selon un exemple de réalisation comportant une membrane 2 suspendue par rapport à un substrat 4 par des moyens de suspension. Les moyens de suspension sont formés par des nanofils 8 reliant la membrane 2 à des plots d'ancrage 10 du substrat.

Le capteur de flux thermique comporte également des connexions électriques 12.1, 12.2 et 14.1, 14.2 formés par des nanofils reliant la membrane à des plots de contacts électriques A, B, C, D respectivement.

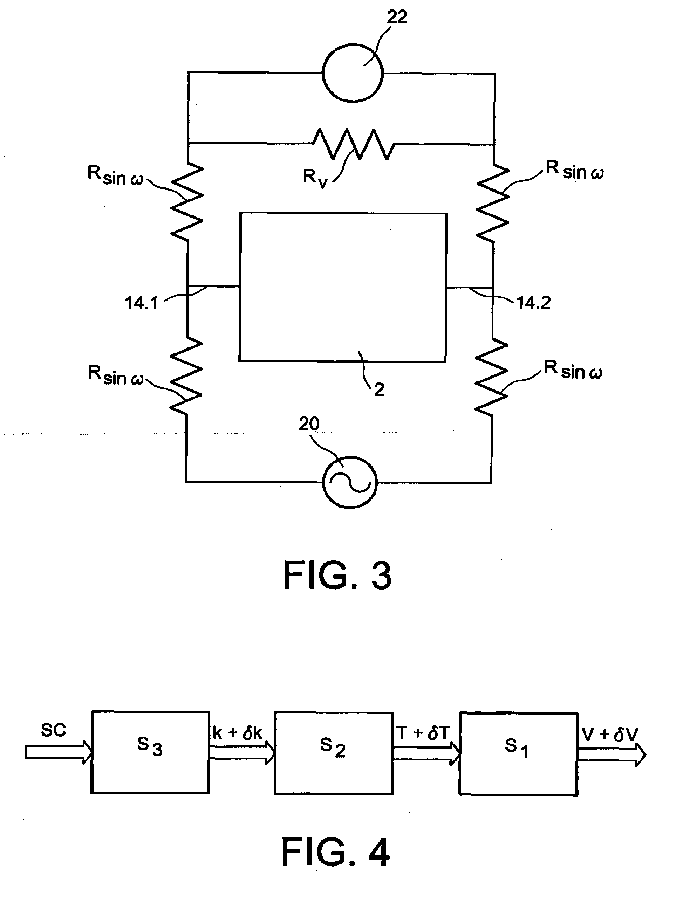

De manière très avantageuse, les nanofils 12.1, 12.2 forment à la fois des moyens de polarisation de la membrane et des moyens de chauffage de la membrane 2. Les nanofils sont connectés électriquement à une source de courant 20 (représentée sur la figure 3). Ainsi, le nombre de liaison entre le substrat et la membrane susceptibles d'être le siège de fuites thermiques est réduit.

Les nanofils 14.1, 14.2 sont connectés électriquement à un voltmètre 22 (représenté sur la figure 3) et forment ainsi des moyens de mesure de la variation de la tension aux bornes de la membrane.

Sur la figure 2, on peut voir une vue en coupe le capteur disposé dans un canal fluidique 24 connecté à une source d'alimentation en gaz à analyser.

Dans la présente demande, on entend par "nanofil" des fils conducteurs électriques de taille nanométriques, i.e. dont la section est comprise entre 10x10 nm$^2$ et 1000x1000 nm$^2$ et avantageusement égale à 50x50 nm$^2$ et la longueur est comprise entre 100 nm et 10 $\mu$m et avantageusement de l'ordre de 2$\mu$m.

La membrane a de préférence une surface comprise entre : 1 $\mu$m$^2$ et 100$\times$100 $\mu$m$^2$, et une épaisseur comprise entre 10 nm et 1$\mu$m.

Le matériau est choisi pour présenter un coefficient thermique de résistivité élevé (Ou TCR "Thermal Coefficient of Resistivity" en terminologie anglaise). En outre, il est de préférence choisi pour avoir un point de fusion très élevé autorisant ainsi des températures de fonctionnement élevées augmentant le rapport signal à bruit.

La partie suspendue du capteur peut être réalisée en silicium. De préférence, elle peut être réalisée en matériau dopé pour augmenter coefficient thermique de résistivité. Par exemple, la partie suspendue du capteur est en silicium dopé N ou P. Avantageusement, le silicium peut être poreux afin d'augmenter la surface d'échange thermique.

Alternativement elle peut être réalisée en germanium ou en SiGe.

Dans le cas d'une structure en silicium, la température de fonctionnement est de l'ordre de 600°C.

De manière particulièrement avantageuse, la membrane et les nanofils peuvent être en TiN qui autorise des températures de fonctionnement de l'ordre de 2000°C, ce qui permet d'augmenter le rapport signal à bruit.

Pour le silicium, le TCR est de l'ordre de 1000ppm, et pour le TiN, le TCR est de l'ordre de 100ppm.

Sur la figure 3, on peut voir représenté un schéma d'un circuit électrique du capteur selon l'invention.

La source de courant 20 est connectée aux plots A et B et le voltmètre 22 est connectés aux plots C et D. Le capteur utilise une méthode de transduction purement résistive, les variations de température dans la membrane étant mesurées par le biais des variations de sa résistivité électrique.

$R_V$ désigne l'impédance du voltmètre, $R_{sinw}$ désigne la résistance électrique de chacun des nanofils 12.1, 12.2, 14.1, 14.2.

$V_1$ - $V_2$ est la tension mesurée aux bornes de la membrane 4.

De préférence, le voltmètre présente une haute impédance par rapport aux résistances $R_{sinw}$ des nanofils 14.1, 14.2. De cette manière, la tension aux bornes des nanofils 14.1, 14.1 peut être négligée. La tension mesurée en les points C et D peut alors être considérée comme égale à $V_1$ - $V_2$.

En outre, cela permet de s'affranchir des phénomènes de bruit pouvant survenir dans les nanofils.

Le capteur délivre un signal représentatif de la variation de la tension aux bornes de la membrane, à partir de cette mesure est déterminée la variation d'une résistance électrique de la membrane due à la variation de la température de la membrane, qui, elle-même, dépend de la composition de l'environnement gazeux en contact avec la membrane. Il est alors possible de déterminer la composition de l'environnement gazeux.

Nous allons montrer l'intérêt du capteur selon la présente invention.

La membrane est chauffée par effet Joule.

Un courant circule entre les points A et B, i.e. dans le nanofil 12.1, dans la membrane 2 et dans le nanofil 12.2 et échauffe l'ensemble par effet Joule.

Or les nanofils 12.1, 12.2 présentent une section beaucoup plus petite que celle de la membrane, il est donc considéré que l'intégralité de la puissance produite provient des nanofils. La membrane est donc principalement chauffée par conduction à travers les nanofils, la puissance thermique étant produite par les nanofils.

La structure est polarisée à l'aide d'un courant circulant entre les plots A et B. La puissance thermique produite dans les nanofils est égale à

$$P_J = 2R_{sinw}I^2$$

Les pertes thermiques de la membrane 2 peuvent être représentées par deux résistances :

- $R_{th_{sinw}}$ : la résistance thermique de chaque nanofil, celle-ci est de préférence maximisée afin de limiter les pertes thermiques à travers les nanofils.
- $R_{th_{gaz}}$ : la résistance thermique du gaz, celle-ci est de préférence faible pour favoriser les échanges thermiques avec la membrane.

L'élévation de température dans la membrane s'écrit alors :

$$\Delta T = \frac{P_J}{G_{th_{sinw}} + G_{th_{gaz}}}$$

Avec $G_{th_{sinw}} = \frac{1}{R_{th_{sinw}}}$ et $G_{th_{gaz}} = \frac{1}{R_{th_{gaz}}}$ les conductances thermiques du nanofil et du gaz.

La variation de température peut s'écrire:

$$\Delta T = \frac{P_J}{G_{th_{gaz}}\left(1 + \frac{G_{th_{sinw}}}{G_{th_{gaz}}}\right)} \quad (I)$$

La conductivité thermique du gaz peut s'écrire :

$$G_{th_{gaz}} = \frac{k_{th_{gaz}} L_m^2}{d_t}$$

avec $L_m$ la longueur caractéristique de la membrane, $d_t$ la distance entre le thermostat et la membrane et $k_{thgaz}$ la conductivité thermique du gaz.

Grâce à l'invention, la membrane 4 est isolée thermiquement du substrat par les nanofils qui ont l'avantage de présenter une résistivité thermique plus importante que celle de la membrane, notamment du fait du confinement des phonons dans les structures nanométriques. La conductivité thermique des nanofils est donc faible.

Il en résulte que le rapport $\frac{G_{th_{gaz}}}{G_{th_{sinw}}}$ est grand.

On en déduit à partir de la relation (I) que la variation de température $\Delta T$ peut être approximée à

$$\Delta T = \frac{P_J}{G_{th_{gaz}}} \text{ ou } \Delta T = \frac{P_J}{\frac{k_{th_{gaz}} L_m^2}{d_t}}$$

En augmentant le rapport $\frac{G_{th_{gaz}}}{G_{th_{sinw}}}$ , on augmente la dépendance de la température par rapport à la conductivité thermique du gaz.

La variation de température $\Delta T$ est alors inversement proportionnelle à la conductivité thermique du gaz. Le capteur selon l'invention est donc très sensible à la nature du gaz entrant en contact avec la membrane.

La variation de température s'écrit :

$$\Delta T = \frac{P_J}{G_{th_{sinw}} + \frac{k_{th_{gaz}} L_m^2}{d_t}}$$

Nous allons déterminer la sensibilité du capteur selon la présente invention.

Sur la figure 4, on peut voir un schéma-bloc représentant les étapes successives du procédé de détermination menant à la détection d'un gaz.

- $\delta C$ représente un pic de concentration d'analyte,
- k la conductivité thermique de l'environnement gazeux entourant la membrane;
- T la température de la membrane,
- V la tension aux bornes de la membrane qui est assimilable à la tension aux bornes du voltmètre,
- $S_1$, $S_2$, $S_3$ représentent les sensibilités de chacune des étapes de détermination.

Lorsqu'un pic de concentration d'analyte $\delta C$ arrive à la surface de la membrane, il en résulte une variation de la conductivité thermique du gaz $\delta k$. Nous définissons alors la sensibilité de cette étape par $S_3 = \frac{\delta k}{\delta C}$.

La température de la membrane est dépendante de la conductivité thermique du gaz. Nous définissons alors $S_2 = \frac{\delta T}{\delta k}$.

Une variation de température entraîne une variation de la résistance électrique de la membrane et par conséquent une variation de la tension à ses bornes.

Nous définissons $S_1 = \frac{1}{V}\frac{\delta V}{\delta T}$ . S1 correspond au coefficient de température de résistance du matériau.

Ainsi une variation de concentration en analyte provoque une variation de tension aux bornes de la membrane.

Dans le cas de figure général d'un capteur de flux thermique, l'étape de détection d'un pic de concentration d'analyte $\delta C$, qui fait le lien entre concentration en analyte et conductivité thermique, n'a pas lieu

La sensibilité totale du système s'écrit :

$$S_{tot} = \frac{1}{V}\frac{\delta V}{\delta C} = S_1 S_2 S_3$$

Nous allons maintenant déterminer la résolution du capteur.

La résolution du capteur est limitée par son bruit.

Plusieurs sources de bruit sont à prendre en compte :

- Le bruit de Johnson : $S_J = 4k_b T R$, lié aux variations de mobilité des porteurs (interactions phonons/électrons et phonons/trous).

- Le bruit de Flicker : $S_{1/f} = \frac{H V^2}{N f}$

- Le bruit thermique ou bruit de phonons :

- $S_{phonons} = \frac{4 k T^2}{G}$, lié aux fluctuations de l'énergie interne de la membrane.

La limite de résolution en tension du système est alors donnée par l'intégrale du bruit total sur la bande passante :

$$\delta V \cong \sqrt{(S_J + S_{1/f} + S_{phonons}).BW}$$

BW est la bande passante d'intégration du signal.

La résolution en concentration du système peut alors être déduite :

$$\delta C = \frac{1}{V.S_{tot}}\sqrt{(S_J + S_{1/f} + S_{phonons}).BW}$$

Afin de réduire le bruit de Flicker également désigné "bruit en 1/f", il est avantageux d'effectuer les mesures de manière dynamique, i.e. en travaillant avec une source de courant alternatif à une fréquence suffisamment élevée.

La valeur de la fréquence du courant d'alimentation est choisie pour que le système fonctionne en mode quasi-statique. En effet si la fréquence du courant est trop élevée, l'inertie du système ne permet pas une élévation importante de la membrane et l'amplitude du signal utile est réduite.

Par ailleurs le fait de moduler l'élévation de température peut permettre de s'affranchir des dérives statiques du signal électrique ou de la température.

Cette mesure se fait par exemple en imposant un courant alternatif et en mesurant l'harmonique à 2w de la tension aux bornes de la membrane. Le courant imposé à w entraine une variation de la température et donc de la résistance dans le fil à 2w, qui peut écrire AR=ΔR0×cos(2ωt). En injectant un courant constant dans le fil 10, il en résulte donc une composante de la tension qui vaut ΔR*10.

Il est possible de réaliser la membrane et les nanofils dans des matériaux différents. En choisissant les matériaux, il est possible de limiter l'influence des phénomènes survenant dans les nanofils ou leurs ancrages pour qu'apparaissent des variations de température uniquement dans la membrane, ce qui permet d'augmenter la sensibilité du capteur.

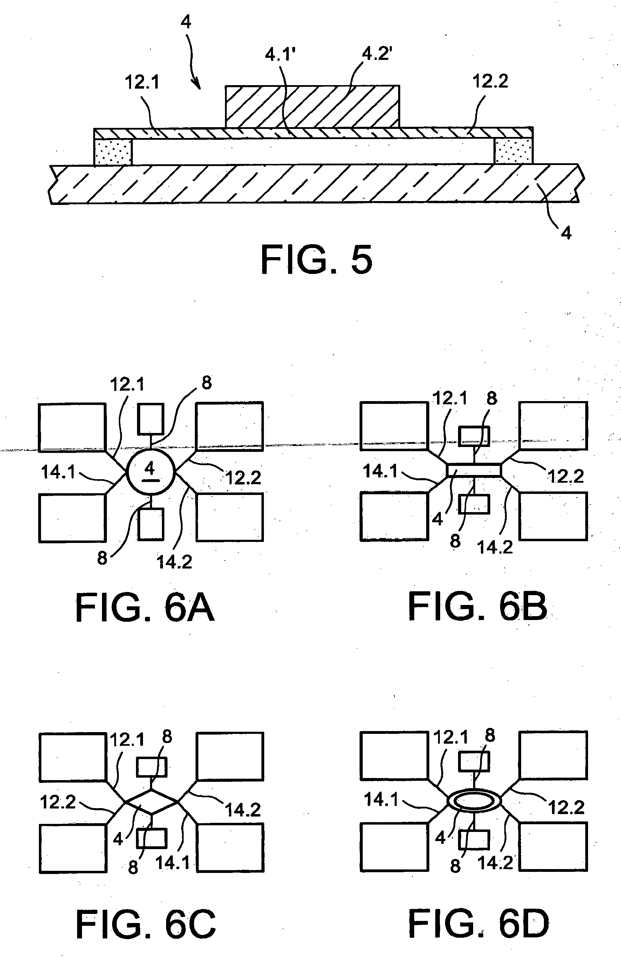

Dans un exemple de réalisation avantageux représenté sur la figure 5, le capteur comporte une partie d'un seul tenant en silicium formant les nanofils et une première partie de la membrane 4.1' formant support et une deuxième partie 4.2' de la membrane 4' recouvrant la première partie 4.1' et formant la partie sensible du capteur, la deuxième partie 4.2' est en un matériau présentant un coefficient de température de résistance élevé.

Dans un exemple avantageux, la deuxième partie 4.2' est en TiN qui présente un coefficient de température de résistance élevé et une température de fusion très élevée, supérieure à 2900°C.

Dans cet exemple de réalisation, la deuxième partie 4.2' de la membrane 4' est chauffée par les nanofils 12.1, 12.2 et la première partie 4.1'.

Le coefficient de température de résistance caractérise l'influence de la température sur la résistance électrique du matériau.

Le signal de sortie du système est donc proportionnel au coefficient de température de résistance et la résolution minimale du système est inversement proportionnelle à ce coefficient. En choisissant un matériau présentant un coefficient de température de résistance élevé, la résolution minimale peut être encore abaissée.

De manière encore plus avantageuse, les nanofils sont réalisés en un matériau présentant un coefficient de température de résistance très faible voire quasi nul, la résistance électrique des nanofils est alors quasiment insensible à la température, et seule la résistance de la membrane varie en fonction de la température. Dans cet exemple, la première partie de la membrane est, du fait du procédé de fabrication, également réalisée en un matériau présentant un coefficient de température de résistance très faible, cependant grâce au dépôt de la couche de matériau présentant un coefficient de température de résistance élevé la résistance électrique de la membrane varie fortement avec la température.

Par exemple, les nanofils sont réalisés en silicium dopé de manière à annuler le coefficient thermique de résistivité.

Sur les figures 6A à 6D, on peut voir d'autres exemples d'architecture d'un capteur selon l'invention.

Sur la figure 6A, la membrane 4 a la forme d'un disque et est suspendue mécaniquement par deux nanofils.

Sur la figure 6B, la membrane 4 a la forme d'un rectangle et est suspendue mécaniquement par deux nanofils 8 qui se raccordent à la membrane aux milieux des grands côtés du rectangle. Les nanofils de connexion électrique 12.1, 12.2, 14.1, 14.2 sont reliés aux quatre sommets du rectangle.

Sur la figure 6C, la membrane 4 a la forme d'un losange et est suspendue mécaniquement par deux nanofils au niveau de deux sommets opposés du losange.

Les nanofils de connexion électrique 12.1, 12.2, 14.1, 14.2 sont reliés par deux à chacun des deux autres sommets opposés du losange reliés par la diagonale de plus grande longueur.

Sur la figure 6D, la membrane 4 a la forme d'un anneau en forme d'ellipse et est suspendue mécaniquement par deux nanofils 8 alignés sur le petit axe de l'ellipse. Les nanofils de connexion électrique 12.1, 12.2, 14.1, 14.2 sont reliés par deux aux deux extrémités de l'ellipse alignés sur le grand axe.

La structure de la figure 6B est particulièrement avantageuse car elle assure une diffusion quasi-homogène et rapide de la température à travers la membrane. La structure de la figure 6C assure une diffusion quasi-homogène et relativement rapide à travers la membrane.

Comme cela a été expliqué avec l'exemple de la figure 1, les nanofils de suspension mécanique peuvent être omis.

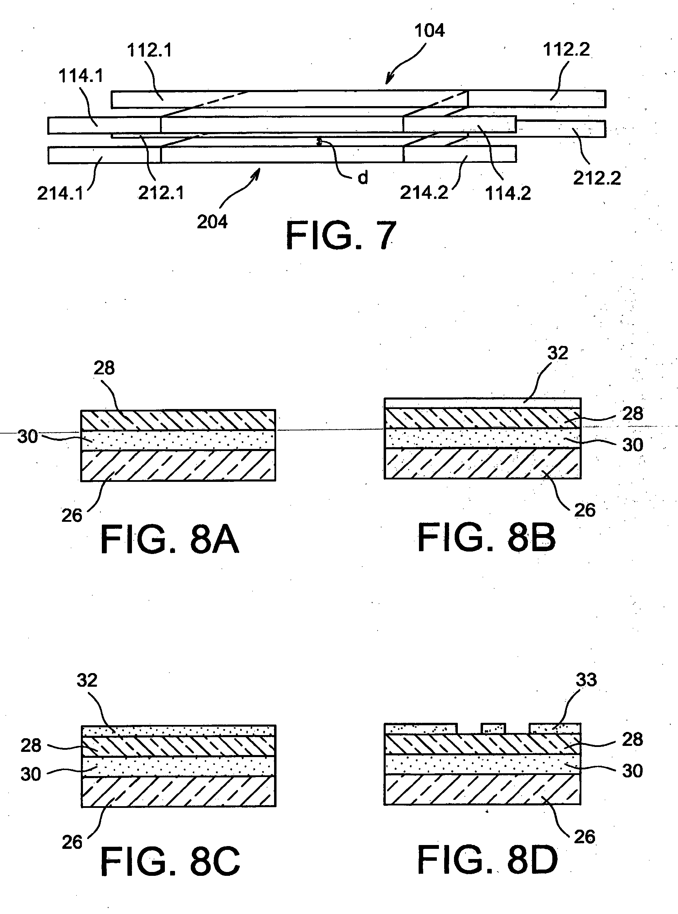

Sur la figure 7, on peut voir un autre exemple de réalisation d'un capteur de flux thermique comportant une première et une deuxième membrane suspendues et disposées parallèlement l'une par rapport à l'autre.

La première membrane 104 est destinée à l'excitation du capteur et la deuxième membrane 204 est destinée à la détection.

La première membrane est suspendue par quatre nanofils 112.1, 112.2, 114.1, 114.2. Les nanofils 112.1, 112.2 sont destinés à être connectés à une première source de courant pour chauffer la première membrane 104.

De préférence, on mesure la tension de la première membrane et on détermine sa température. Les nanofils 112.1, 112.2 polarisent avantageusement la première membrane, et les nanofils 114.1, 114.2 sont reliés à un voltmètre.

En variante, on pourrait envisager de ne pas déterminer la température de la première membrane, dans ce cas les nanofils 114.1, 114.2 servent uniquement de moyens de suspension.

La deuxième membrane 204 est également suspendue par quatre nanofils 212.1, 212.2, 214.1, 214.1.

La première et la deuxième membrane sont séparées d'une distance d, par exemple de l'ordre de une à plusieurs centaines de nanomètres.

Les nanofils 212.1, 212.2 sont destinés à être connectés à une deuxième source de courant pour polariser la membrane. De préférence, la source de tension délivre un courant constant et faible amplitude par rapport à celui délivré par la première source de courant, pour éviter une interférence entre le signal d'excitation et le signal de détection. En polarisant avec un courant de faible amplitude, on évite un échauffement important de la deuxième membrane par le courant servant à la polariser.

Les nanofils 214.1, 214.2 sont destinés à être connectés à un voltmètre pour mesurer la variation de tension dans la membrane résultant de l'échauffement de la deuxième membrane.

Le fonctionnement de ce capteur va maintenant être décrit.

L'environnement gazeux à analyser se situe entre les deux membranes 104, 204.

Un courant circule dans les nanofils 112.1, 112.2 et dans la première membrane 104. Par effet Joule, les nanofils 112.1, 112.2 s'échauffent et échauffent la première membrane 104 par conduction. La deuxième membrane est échauffée par conduction à travers le gaz se trouvant entre les deux membranes.

L'échauffement de la deuxième membrane dépend donc de la conductivité thermique du gaz.

La tension est mesurée aux bornes de la deuxième membrane 204 au moyen du voltmètre.

A partir de cette mesure, la température de la deuxième membrane est déterminée. Connaissant la température de la première membrane, on peut alors en déduire la composition de l'environnement gazeux situé entre les deux membranes qui a assuré l'échauffement de la deuxième membrane à partir de l'échauffement de la première membrane, de manière similaire à la méthode décrite ci-dessus pour le capteur à une membrane.

Comme cela a été décrit ci-dessus, le signal d'excitation peut être un courant alternatif, ce qui permet de réduire le bruit de Flicker. Dans ce cas le courant de polarisation de la deuxième membrane est un courant continu.

La forme des membranes n'est pas limitative et les formes des exemples de réalisation des figures 6A à 6D peuvent être utilisées dans le capteur de la figure 7.

Il est également envisageable de placer un ou des nanofils en regard d'une membrane, qui récupère la chaleur créée par les nanofils.

En outre, de manière avantageuse les encastrements des moyens de suspension mécanique de la membrane et des nanofils de chauffage de la membrane peuvent être nanostructurés afin de limiter la conduction thermique par les ancrages. En effet, en faisant par exemple des trous de taille nanométrique, par exemple dans du silicium, de l'ordre de 20 nm de diamètre avec un pas de 15 nm à 20 nm, il est possible de bloquer la diffusion de la chaleur tout en préservant les bonnes propriétés de conduction électriques. Ainsi les encastrements des suspensions deviennent isolants thermiquement mais restent conducteurs pour les électrons (ou les trous). A titre d'exemple, un silicium monocristallin nano structuré de la sorte exhibe des conductivités thermiques aussi faibles que le silicium amorphe. Ces moyens isolants sont appelés isolateurs phononiques.

Il peut être envisagé de remplir les trous avec un matériau isolant tel que du SiO2 ou SiOC, voire du SiN... ce qui peut être avantageux pour renforcer mécaniquement les ancrages.

Nous allons maintenant décrire un exemple de procédé de fabrication d'un capteur selon la présente invention.

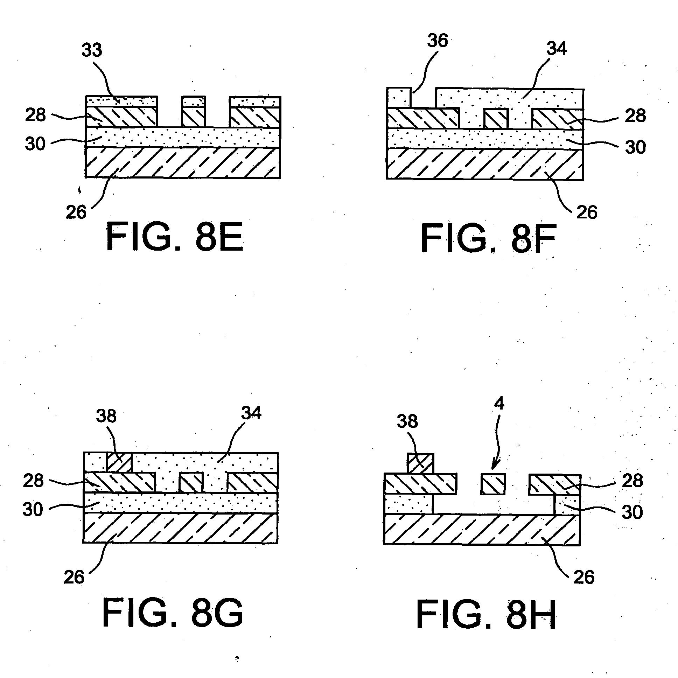

Sur les figures 8A à 8H, on peut voir des représentations schématiques de différentes étapes du procédé de réalisation.

Dans l'exemple décrit, on utilise une plaque de SOI (Silicon On Insulator) en terminologie anglaise ou silicium sur isolant, représenté sur la figure 8A. Le substrat SOI comporte une couche de silicium 26, une couche de silicium monocristallin 28, les couches 26, 28 étant séparées par une couche de $SiO_2$ 30. La couche de silicium monocristallin 28 forme la face avant.

Lors d'une première étape une couche de d'oxyde $SiO_2$ 32 est déposée sur la couche 28. L'élément ainsi formé est représenté sur la figure 8B.

Lors d'une étape suivante, on effectue un dopage P++ par exemple au bore, de la couche de silicium 28 située entre la couche d'oxyde 30 et la couche d'oxyde 32.

Le dopage au travers de la couche d'oxyde permet une répartition plus homogène des dopants dans la couche 28. Le dopage obtenu est de l'ordre de $1.10^{19}$ at./cm$^3$). Ce dopage a pour effet de maximiser le coefficient de température de résistance du silicium.

L'élément ainsi formé est représenté sur la figure 8C. Le dopage est symbolisé par des points.

Lors d'une étape suivante, on retire la couche d'oxyde 32 et on dépose une couche de résine 33, dans laquelle définit les contours des motifs dans la résine 32 par lithographie, par exemple par lithographie en UV profond (DUV pour Deep-UV en en terminologie anglaise) ou par une lithographie hybride DUV et à faisceau d'électrons (e-beam en terminologie anglaise). Ces procédé de lithographie sont bien connus de l'homme du métier et ne seront pas décrits en détail. La lithographie e-beam permet de s'affranchir des effets liés à la diffraction de la lumière lors de la gravure de dispositifs nanométriques.

L'élément ainsi formé est représenté sur la figure 8D.

Lors d'une étape suivante, la couche de silicium est gravée, par exemple par gravure ionique réactive ou RIE (Reactive Ion Etching en anglais) anisotrope.

L'élément ainsi formé est représenté sur la figure 8E.

Lors d'une étape suivante, on effectue un dépôt chimique de $SiO_2$ 34 sur la couche de silicium gravée 28 qui est ensuite gravé, par exemple par gravure plasma, pour délimiter les emplacements 36 des contacts électriques.

On réalise ensuite les contacts électriques 38 en déposant par exemple de l'aluminium, par exemple par dépôt par pulvérisation

L'élément ainsi obtenu est représenté sur la figure 8F.

Lors d'une étape suivante, la structure est libérée, par exemple en gravant la couche 30, par exemple avec de l'acide fluorhydrique vapeur.

La structure libérée est visible sur la figure 8F. La membrane 4 et les nanofils sont ainsi réalisés d'un seul tenant en silicium monocristallin.

A titre d'exemple, la couche 28 a une épaisseur de 160 nm, la couche 30 d'oxyde enterré a une épaisseur de 400 nm, la couche de silicium 26 a une épaisseur 750 $\mu$m, la couche d'oxyde 32 a une épaisseur 400 nm et la couche de résine 33 a une épaisseur de 800 nm.

Pour l'oxyde et la résine ces valeurs sont des ordres de grandeur, selon la résolution souhaitée elles peuvent varier mais sont inférieures au de préférence inférieures au micromètre.

On a donc réalisé un capteur de flux thermique offrant une sensibilité à la variation de composition de l'environnement gazeux. En outre, ses dimensions réduites le rendent très compact.

Le capteur de flux thermique est particulièrement adapté à la réalisation d'un capteur de gaz. Un tel capteur de gaz peut être avantageusement associé à une colonne de chromatographie en phase gazeuse, plus particulièrement à une microcolonne de chromatographie en phase gazeuse. Un dispositif d'analyse de gaz peut comporter une microcolonne de chromatographie en phase gazeuse et un capteur selon l'invention disposé dans un canal connecté en série avec la sortie de la microcolonne, et une électronique de traitement des signaux délivrés par le capteur.

La microcolonne est avantageusement réalisée par les techniques de la microélectronique.

De préférence, le dispositif d'analyse comporte plusieurs capteurs en série.

Le dispositif d'analyse peut comporter plusieurs microcolonnes, chacune étant connectée en série directement avec un capteur selon l'invention et formant ainsi un sous-ensemble. Le dispositif comporte alors une pluralité de sous-ensembles connectés en série. De manière avantageuse, l'électronique de traitement est commune à tous les capteurs.

Le mélange gazeux à analyser est injecté dans la microcolonne, les différents analytes sont séparés et sortent de la colonne successivement. Le ou les capteurs voient alors des pics d'analytes décalé dans le temps.

Ce dispositif de mesure est très compact et présente une très bonne résolution.

## Revendications

1. Capteur de flux thermique comportant un premier support, au moins une première membrane (4, 4') suspendue par rapport au support par au moins quatre nanofils (12.1, 12.2, 14.1, 14.2), ladite première membrane (4, 4') étant réalisée en au moins un matériau conduisant le courant, et les nanofils (12.1, 12.2, 14.1, 14.2) étant réalisés en un matériau conduisant le courant, deux nanofils (12.1, 12.2) étant reliés à une source de courant (20) pour former des moyens de polarisation entre deux bornes de la première membrane (4, 4') et de chauffage de ladite première membrane (4, 4'), et deux nanofils (14.1, 14.2) étant reliés à des moyens de mesure (4, 4') de la tension aux bornes de la première membrane (4, 4'), les nanofils (12.1, 12.2,) ayant une section comprise entre 10x10 $nm^2$ et 1000x1000 $nm^2$

2. Capteur de flux thermique selon la revendication 1, dans lequel la première membrane (4, 4') a une épaisseur comprise entre 10 nm et 1 $\mu$m.

3. Capteur de flux thermique selon la revendication 1 ou 2, dans lequel la première membrane (4) et les nanofils (12.1, 12.2, 14.1, 14.2) sont formés par une même couche de matériau conduisant le courant de sorte à être d'un seul tenant.

4. Capteur de flux thermique selon la revendication 3, dans lequel la première membrane (4) et les nanofils (12.1, 12.2, 14.1, 14.2) sont réalisés en matériau semi-conducteur, par exemple en silicium dopé N ou P, en germanium ou en SiGe.

5. Capteur de flux thermique selon la revendication 1, dans lequel la première membrane (4') comporte une première partie (4.1') d'un seul tenant avec les nanofils (12.1, 12.2, 14.1, 14.2) et une deuxième partie (14.2') formée par une couche de matériau formé sur la première partie (4.1'), le matériau des nanofils (12.1, 12.2, 14.1, 14.2) et de la première partie (4.2') présentant une faible conductivité thermique et le matériau de la deuxième partie (4.2') présente un coefficient de température de résistance élevé.

6. Capteur de flux thermique selon la revendication 5, dans lequel la conductivité thermique du matériau des nanofils (12.1, 12.2, 14.1, 14.2) et de la première partie (4.2') est inférieure à 100 W/m.K et le coefficient de température de résistance du matériau de la deuxième partie (4.2') est supérieur à 1000ppm/K.

7. Capteur de flux thermique selon la revendication 5 ou 6, dans lequel les nanofils (12.1, 12.2, 14.1, 14.2) et la première partie (4.2') sont en silicium et la deuxième partie est en TiN.

8. Capteur de flux thermique selon l'une des revendications 1 à 7, dans lequel la source de courant (20) est une source de courant alternatif.

9. Capteur de flux thermique selon la revendication 8, dans lequel la source de courant alternatif a une fréquence comprise entre 10 Hz et 1MHz et avantageusement 1KHz et 10KHz.

10. Capteur de flux thermique selon l'une des revendications 1 à 9, comportant des éléments de suspension supplémentaires (8) destinés uniquement à la suspension mécanique de la première membrane (4) par rapport au support.

11. Capteur de flux thermique selon l'une des revendications 1 à 10, comportant des encastrements des nanofils et/ou des éléments de suspension supplémentaires sur le support, les encastrements des nanofils et/ou des éléments de suspension supplémentaires étant nanostructurés de sorte à réduire la conduction thermique des encastrements.

12. Capteur de flux thermique selon l'une des revendications 1 à 11, dans lequel la première membrane (4) a la forme d'un losange et dans lequel les nanofils sont connectés aux sommets reliés par la plus grande diagonale du losange

13. Capteur de flux thermique selon l'une des revendications 1 à 12, comportant une deuxième membrane suspendue à un deuxième support par au moins quatre nanofils, ladite deuxième membrane étant disposée parallèlement à la première membrane à une distance (d) non nulle, lesdits nanofils étant réalisés en un matériau conduisant le courant, deux nanofils (212.1, 22.2) étant reliés à une deuxième source de courant (20) pour former des moyens de polarisation entre deux bornes de la deuxième membrane (204), et deux nanofils (214.1, 214.2) étant reliés des moyens de mesure (4, 4') de la tension aux bornes de la deuxième membrane (204), les nanofils ayant une section comprise entre $10 \times 10nm^2$ et $1000 \times 1000$ $nm^2$.

14. Capteur de flux thermique selon la revendication 13, dans lequel les première et deuxième sources de courant sont des sources de courants alternatifs, la deuxième source de courant délivre un courant de fréquence différente de la fréquence du courant délivré par la première source de courant.

15. Capteur de flux thermique selon la revendication 13, dans lequel les première et deuxième sources de courant sont des sources de courants continues, la deuxième source de courant délivre un courant d'intensité inférieure à l'intensité du courant délivré par la première source de courant de façon à éviter l'autoéchauffement dans la seconde membrane.

16. Système de détermination de la concentration d'un environnement gazeux comportant au moins un capteur de flux thermique selon l'une des revendications 1 à 15, une électronique de traitement des valeurs de tension électrique délivrées par le capteur.

17. Dispositif d'analyse d'un gaz ou mélange de gaz comportant une colonne de chromatographie (CG) en phase gazeuse et au moins un système de détermination selon la revendication 16, la première et éventuellement la deuxième membrane étant suspendue(s) dans un canal connecté à la sortie de la colonne de chromatographie en phase gazeuse.

**Patentansprüche**

1. Wärmeflusssensor, enthaltend einen ersten Träger, zumindest eine erste Membran (4, 4'), die über zumindest vier Nanodrähte (12.1, 12.2, 14.1, 14.2) bezüglich des Trägers aufgehängt ist, wobei die erste Membran (4, 4') aus zumindest einem stromleitenden Material hergestellt ist und wobei die Nanodrähte (12.1, 12.2, 14.1, 14.2) aus einem stromleitenden Material hergestellt sind, wobei zwei Nanodrähte (12.1, 12.2) mit einer Stromquelle (20) verbunden sind, um Mittel zur Polarisation zwischen zwei Anschlüssen der ersten Membran (4, 4') und zum Erwärmen der ersten Membran (4, 4') zu bilden, und wobei zwei Nanodrähte (14.1, 14.2) mit Mitteln (4, 4') zum Messen der Spannung an den Anschlüssen der ersten Membran (4, 4') verbunden sind, wobei die Nanodrähte (12.1, 12.2) einen Querschnitt zwischen 10 x 10 nm$^2$ und 1000 x 1000 nm$^2$ haben.

2. Wärmeflusssensor nach Anspruch 1, wobei die erste Membran (4, 4') eine Dicke zwischen 10 nm und 1 $\mu$m hat.

3. Wärmeflusssensor nach Anspruch 1 oder 2, wobei die erste Membran (4) und die Nanodrähte (12.1, 12.2, 14.1, 14.2) aus einer gleichen stromleitenden Materialschicht so ausgebildet sind, dass sie aus einem Stück bestehen.

4. Wärmeflusssensor nach Anspruch 3, wobei die erste Membran (4) und die Nanodrähte (12.1, 12.2, 14.1, 14.2) aus einem Halbleitermaterial hergestellt sind, beispielsweise aus N- oder P-dotiertem Silicium, Germanium oder SiGe.

5. Wärmeflusssensor nach Anspruch 1, wobei die erste Membran (4') einen ersten Abschnitt (4.1') aufweist, der einstückig mit den Nanodrähten (12.1, 12.2, 14.1, 14.2) ausgebildet ist, sowie einen zweiten Abschnitt (14.2'), der aus einer Materialschicht gebildet ist, die am ersten Abschnitt (4.1') gebildet ist, wobei das Material der Nanodrähte (12.1, 12.2, 14.1, 14.2) und des ersten Abschnitts (4.2') eine geringe Wärmeleitfähigkeit haben und das Material des zweiten Abschnitts (4.2') einen hohen Widerstandstemperaturkoeffizienten hat.

6. Wärmeflusssensor nach Anspruch 5, wobei die Wärmeleitfähigkeit des Materials der Nanodrähte (12.1, 12.2, 14.1, 14.2) und des ersten Abschnitts (4.2') geringer als 100 W/m.K ist und der Widerstandstemperaturkoeffizient des Materials des zweiten Abschnitts (4.2') über 1000 ppm/K beträgt.

7. Wärmeflusssensor nach Anspruch 5 oder 6, wobei die Nanodrähte (12.1, 12.2, 14.1, 14.2) und der erste Abschnitt (4.2') aus Silicium bestehen und der zweite Abschnitt aus TiN besteht.

8. Wärmeflusssensor nach einem der Ansprüche 1 bis 7, wobei die Stromquelle (20) eine Wechselstromquelle ist.

9. Wärmeflusssensor nach Anspruch 8, wobei die Wechselstromquelle eine Frequenz wischen 10 Hz und 1 MHz und vorteilhaft 1 KHz und 10 KHz hat.

10. Wärmeflusssensor nach einem der Ansprüche 1 bis 9, enthaltend zusätzliche Aufhängungsmittel (8), die nur für die mechanische Aufhängung der ersten Membran (4) bezüglich des Trägers bestimmt sind.

11. Wärmeflusssensor nach einem der Ansprüche 1 bis 10, enthaltend Anbauelemente für die Nanodrähte und/oder zusätzlichen Aufhängungselemente an dem Träger, wobei die Anbauelemente für die Nanodrähte und/oder zusätzlichen Aufhängungselemente nanostrukturiert sind, so dass die Wärmeleitung der Anbauelemente vermindert wird.

12. Wärmeflusssensor nach einem der Ansprüche 1 bis 11, wobei die erste Membran (4) rautenförmig ausgeführt ist und die Nanodrähte an die Spitzen angeschlossen sind, die über die größere Diagonale der Raute verbunden sind.

13. Wärmeflusssensor nach einem der Ansprüche 1 bis 12, enthaltend eine zweite Membran, die an einem zweiten Träger über zumindest vier Nanodrähte aufgehängt ist, wobei die zweite Membran parallel zur ersten Membran in einem Abstand (d) ungleich null angeordnet ist, wobei die Nanodrähte aus einem stromleitenden Material hergestellt sind, wobei zwei Nanodrähte (212.1, 22.2) mit einer zweiten Stromquelle (20) verbunden sind, um Mittel zur Polarisation zwischen zwei Anschlüssen der zweiten Membran (204) zu bilden, und wobei zwei Nanodrähte (214.1, 214.2) mit Mitteln (4, 4') zum Messen der Spannung an den Anschlüssen der zweiten Membran (204) verbunden sind, wobei die Nanodrähte einen Querschnitt zwischen 10 x 10 nm$^2$ und 1000 x 1000 nm$^2$ haben.

14. Wärmeflusssensor nach Anspruch 13, wobei die erste und die zweite Stromquelle Wechselstromquellen sind, wobei die zweite Stromquelle einen Strom mit einer Frequenz abgibt, die sich von der Frequenz des von der ersten Stromquelle abgegebenen Stroms unterscheidet.

15. Wärmeflusssensor nach Anspruch 13, wobei die erste und die zweite Stromquelle Gleichstromquellen sind, wobei die zweite Stromquelle einen Strom mit einer Stärke abgibt, die geringer als die Stärke des Stroms ist, der von der ersten Stromquelle abgegeben wird, so dass die Selbsterwärmung in der zweiten Membran vermieden wird.

**16.** System zum Bestimmen der Konzentration einer gasförmigen Umgebung, enthaltend zumindest einen Wärmeflusssensor nach einem der Ansprüche 1 bis 15 und eine Verarbeitungselektronik zum Verarbeiten der elektrischen Spannungswerte, die von dem Sensor geliefert werden.

**17.** Analysevorrichtung zur Analyse eines Gases bzw. Gasgemischs, enthaltend eine Gaschromatographiesäule (CG) und zumindest ein Bestimmungssystem nach Anspruch 16, wobei die erste und gegebenenfalls die zweite Membran in einem Kanal aufgehängt ist/sind, die mit dem Auslass der Gaschromatographiesäule verbunden ist.

**Claims**

**1.** A heat flux sensor comprising at least one first support, at least one first membrane (4, 4') being suspended relative to the support by at least four nanowires (12.1, 12.2, 14.1, 14.2), said first membrane (4, 4') being made from at least one current-conducting material, and the nanowires (12.1, 12.2, 14.1, 14.2) being made from a current-conducting material, with two nanowires (12.1, 12.2) connected to a current source (20) to form means of polarisation between two terminals of the first membrane (4, 4') and means of heating said first membrane (4, 4'), and two nanowires (14.1, 14.2) being connected to means (4, 4') for measuring the voltage at the terminals of the first membrane (4, 4')n the sensor being **characterized in that** the nanowires (12.1, 12.2) have a section of between $10 \times 10$ nm$^2$ and $1000 \times 1000$ nm$^2$

**2.** A heat flux sensor according to claim 1, in which the first membrane (4, 4') is between 10 nm and 1 $\mu$m thick.

**3.** A heat flux sensor according to claim 1 or 2, in which the first membrane (4) and the nanowires (12.1, 12.2, 14.1, 14.2) are formed by the same current-conducting material such that they form a single piece.

**4.** A heat flux sensor according to claim 3, in which the first membrane (4) and the nanowires (12.1, 12.2, 14.1, 14.2) are made of a semiconductor material, for example of N- or P-doped silicon, germanium or SiGe.

**5.** A heat flux sensor according to claim 1, in which the first membrane (4') comprises a first portion (4.1') forming a single part with the nanowires (12.1, 12.2, 14.1, 14.2), and a second portion (14.2') formed by a layer of material formed on the first portion (4.1'), the material of the nanowires (12.1, 12.2, 14.1, 14.2) and the first portion (4.2') having low thermal conductivity, and the material of the second portion (4.2') has a high temperature coefficient of resistance.

**6.** A heat flux sensor according to claim 5, in which the thermal conductivity of the material of the nanowires (12.1, 12.2, 14.1, 14.2) and of the first portion (4.2') is less than 100 W/m.K and the temperature coefficient of resistance of the material of the second portion (4.2') is greater than 1000ppm/K.

**7.** A heat flux sensor according to claim 5 or 6, in which the nanowires (12.1, 12.2, 14.1, 14.2) and the first portion (4.2') are made of silicon and the second portion is made of TiN.

**8.** A heat flux sensor according to one of claims 1 to 7, in which the current source (20) is an alternating current source.

**9.** A heat flux sensor according to claim 8, in which the alternating current source has a frequency of between 10 Hz and 1 MHz, and advantageously between 1 kHz and 10kHz.

**10.** A heat flux sensor according to one of claims 1 to 9, comprising additional suspension elements (8) intended solely for mechanical suspension of the first membrane (4) relative to the support.

**11.** A heat flux sensor according to one of claims 1 to 10, comprising embedments of the nanowires and/or of the additional suspension elements on the support, where the embedments of the nanowires and/or of the additional suspension elements are nano-structured so as to reduce the thermal conduction of the embedments.

**12.** A heat flux sensor according to one of claims 1 to 11, in which the first membrane (4) has the shape of a rhomb, and in which the nanowires are connected to the apexes linked by the larger diagonal of the rhomb.

**13.** A heat flux sensor according to one of claims 1 to 12,comprising a second membrane suspended from a second support by at least four nanowires, said second membrane being positioned parallel to the first membrane at a non-zero distance (d), said nanowires being made from a current-conducting material, and two nanowires (212.1, 22.2) being connected to a second current source (20) to form polarisation means between two terminals of the second membrane (204), and two nanowires (214.1, 214.2) being connected from the voltage measurement means (4, 4') to the terminals of the second membrane (204), the nanowires (12.1, 12.2) having a section of between 10x10 $nm^2$ and 1000x1000 $nm^2$

14. A heat flux sensor according to claim 13, in which the first and second current sources are alternating current sources, and the second current source delivers a current of a frequency different to the frequency of the current delivered by the first current source.

15. A heat flux sensor according to claim 13, in which the first and second current sources are direct current sources, and the second current source delivers a current which is lower than the current delivered by the first current source, so as to prevent self-heating in the second membrane.

16. A system for determining the concentration of a gaseous environment comprising at least one heat flux sensor according to one of claims 1 to 15, an electronic unit for processing the electrical voltage values delivered by the sensor.

17. A device for analysing a gas or a blend of gases comprising a gas chromatography column (CG), and at least one determination system according to claim 16, the first membrane and eventually the second membrane being suspended in a channel connected to the outlet of the gas chromatography column.

FIG. 1

FIG. 2

$R_{\sin \omega}$    22    $R_{\sin \omega}$

$R_V$

14.1    14.2

$R_{\sin \omega}$    2    $R_{\sin \omega}$

20

## FIG. 3

SC    $S_3$    $k + \delta k$    $S_2$    $T + \delta T$    $S_1$    $V + \delta V$

## FIG. 4

FIG. 5

FIG. 6A

FIG. 6B

FIG. 6C

FIG. 6D

FIG. 7

FIG. 8A

FIG. 8B

FIG. 8C

FIG. 8D

FIG. 8E

FIG. 8F

FIG. 8G

FIG. 8H

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2001044547 A

**Littérature non-brevet citée dans la description**

- **ZHANG et al.** A Micro-Pirani vacuum gauge based on micro-hotplate technology. *Sensors and Actuators A,* 2006, vol. 126, 300-305